# EUROPÄISCHE PATENTSCHRIFT

(11) **EP 0 931 494 B1**
(45) Veröffentlichungstag und Bekanntmachung des Hinweises auf die Patenterteilung: **20.12.2000**
(21) Anmeldenummer: 98811263.7
(22) Anmeldetag: 24.12.1998
(51) Int. Cl.: A47J 43/26

(54) **Nussknacker**
Nutcracker
Casse-noix

(30) Priorität: 27.01.1998 CH 20298; 30.01.1998 CH 22998
(43) Veröffentlichungstag der Anmeldung: 28.07.1999
(73) Patentinhaber: Zyliss Haushaltwaren AG, CH-3250 Lyss (CH)
(72) Erfinder: Weibel, Hans, 3054 Schüpfen (CH)
(74) Vertreter: BOVARD AG - Patentanwälte

(56) Entgegenhaltungen:
- EP-A- 0 755 647
- FR-A- 769 670
- FR-A- 975 797
- US-A- 2 550 197

## Beschreibung

Die vorliegende Erfindung betrifft einen Nussknacker mit zwei zueinander verdrehbaren Griffen, wobei der eine der Griffe an seinem Ende mit einem Aufnahmemittel zur Aufnahme einer Nuss versehen ist, und das Aufnahmemittel im Endbereich des als Drückgriff wirkenden anderen Griffes mit einer Öffnung versehen ist, durch welche der Drückgriff mit seinem als Drückteil wirkenden Endbereich direkt in das Aufnahmemittel einlaufen kann.

Die Patentschrift FR 975 797 zeigt einen Nussknacker gemäß dem Oberbegriff des Anspruchs 1, bei dem ein erster von zwei zueinander um eine Schwenkachse verdrehbaren Griffen einen Aufnahmebereich zur Aufnahme einer Nuss aufweist. Der zweite Griff weist einen Drückteil auf, der bezüglich der Schwenkachse so angeordnet ist, dass er sich auf den Aufnahmebereich zu bewegt, wenn die beiden Griffe auseinander gezogen werden. Ein weiterer Drückteil ist an der Schwenkachse angelenkt, wobei dessen freies Ende über eine Sperrklinke mit dem zweiten Griff verbunden ist. Der weitere Drückteil kann dank der Sperrklinke bezüglich des zweiten Griffes so verstellt werden, dass die Ausgangslage der beiden Griffe unabhängig von der Grösse der zu knackenden Nuss immer etwa gleich ist. Zwar wird bei diesem Nussknacker die Nuss im Aufnahmebereich automatisch richtig plaziert und beim Öffnen der Nuss wird immer genau auf die Nuss gedrückt. Auch kann dieser Nussknacker der Grösse der zu öffnenden Nuss angepasst werden. Jedoch ist dieser Nussknacker kompliziert im Aufbau und weist viele bewegliche Teile auf.

Es ist die Aufgabe der vorliegenden Erfindung, die Nachteile des Standes der Technik zu vermeiden. Dies wird erfindungsgemäss dadurch erzielt, dass das Aufnahmemittel als Korb ausgebildet ist und dass ein auf den Endbereich des Drückgriffes aufsetzbarer Einsatzteil vorgesehen ist, der mit dem als Drückteil wirkenden Endbereich in die Öffnung des Korbes einlaufen kann.

Beim erfindungsgemässen Nussknacker wird nur bis zu einem bestimmten Wert gedrückt, so dass die Nüsse nicht ganz zermalmt werden. Durch den Einsatzteil kann eine optimale Anpassung an die vorliegende Nussgrösse vorgenommen werden und weiter kann dadurch der Öffnungswinkel zwischen den Griffen immer in einem optimalen Verhältnis gehalten werden. Bei einer bevorzugten Ausführungsform ist die hintere Korbwand geschlossen, um das Herausfallen der Nuss beim Einlegen zu verhindern. Weitere bevorzugte Ausführungsformen ergeben sich aus den abhängigen Ansprüchen.

Im folgenden wird anhand der beiliegenden Zeichnung ein Ausführungsbeispiel sowie dessen Verwendung näher beschrieben. Es zeigen
Fig. 1 eine perspektivische Darstellung des geschlossenen Nussknackers mit eingesetztem Einsatzteil,
Fig. 2 den geöffneten Nussknacker mit entferntem Einsatzteil,
Fig. 3 den geöffneten Nussknacker mit entferntem Einsatzteil und Ansicht auf die Korböffnung,
Fig. 4 den geöffneten Nussknacker mit eingesetztem Einsatzteil,
Fig. 5 den Nussknacker mit eingesetztem Einsatzteil beim Öffnen einer kleinen Nuss,
Fig. 6 den Nussknacker ohne Einsatzteil beim Öffnen einer mittleren Nuss,
Fig. 7 den geschlossenen Nussknacker beim Öffnen einer übergrossen Nuss zwischen den Griffen.

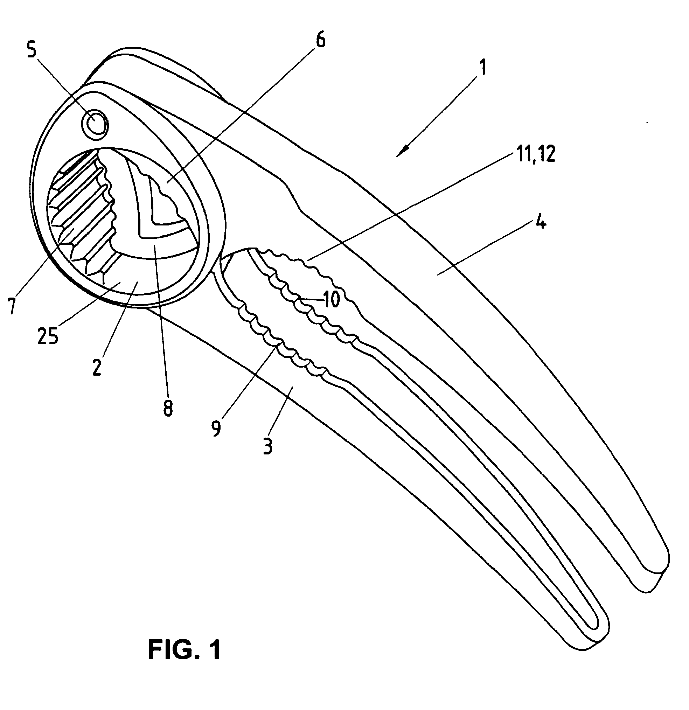

Fig. 1 zeigt den Nussknacker 1 in perspektivischer Ansicht in geschlossenem Zustand. Er umfasst einen mit einem Korb 2 verbundenen Griff 3 und einen beweglich zu diesem angeordneten Drückgriff 4. Der Drückgriff 4 ist um eine Achse 5 um den Korb 2 und damit um den mit dem Korb verbundenen Griff 3 schwenkbar angeordnet. Der als Drückteil ausgebildete gerillte Endbereich 6 wirkt mit den Halterippen 7 an der Korbwand 25 zum Öffnen einer mittelgrossen Nuss zusammen. Beim Nussknacker gemäss Fig. 1 ist auf den Endbereich 6 des Drückgriffes 4 ein Einsatzteil 8 zum Öffnen einer kleinen Nuss aufgesetzt. Auf der Innenseite der Griffe 3 und 4 sind Rillen 9, 10, 11 und 12 zum Öffnen von übergrossen Nüssen vorgesehen.

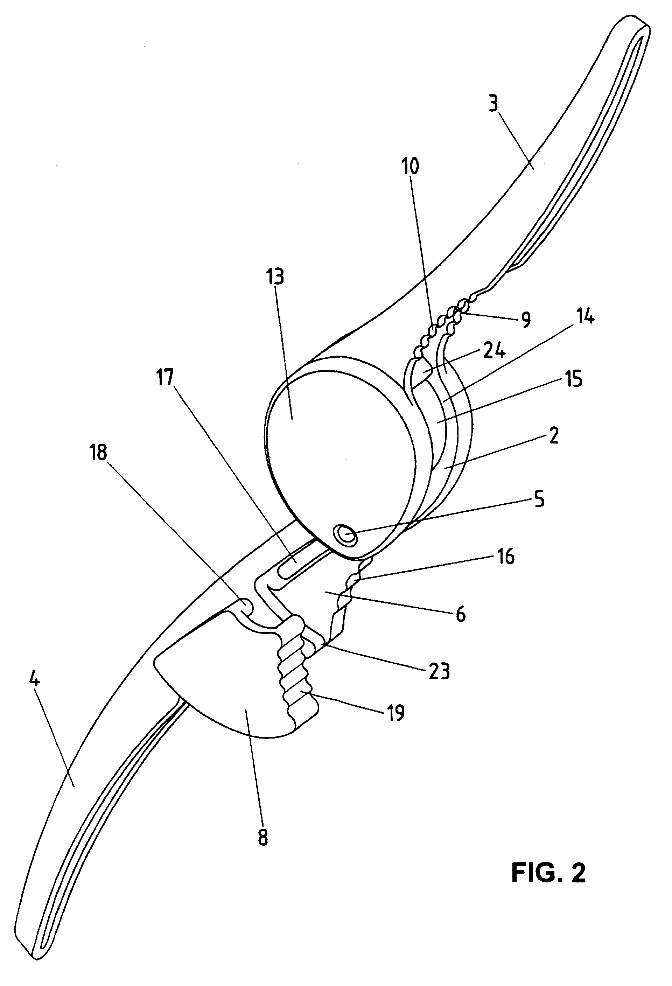

Fig. 2 zeigt den Nussknacker in geöffneter Stellung. Zwischen der hinteren geschlossenen Korbwand 13 und dem vorderen Rand 14 des Korbes 2 befindet sich eine Einlauföffnung 15 für den Drückteil 6 des Drückgriffes 4. Der Endbereich 6 ist mit Rillen 16 versehen. Der Drückteil 6 des Drückgriffes 4 ist mit einer Nut 17 zum Einführen eines Ansatzes 18 des Einsatzteils 8 versehen. Der Einsatzteil 8 ist ebenfalls mit Rillen 19 versehen, die die zu knackende Nuss halten. Der Einsatzteil 8 ist bei der Darstellung gemäss Fig. 2 nicht eingesetzt. Der Drückteil 6 und der Übergang vom Griff 3 zum Korb 2 sind mit Anschlägen 23 und 24 versehen. Diese Anschläge begrenzen die Distanz zwischen Drückteil und Korbwand 25 auf einen bestimmten Wert.

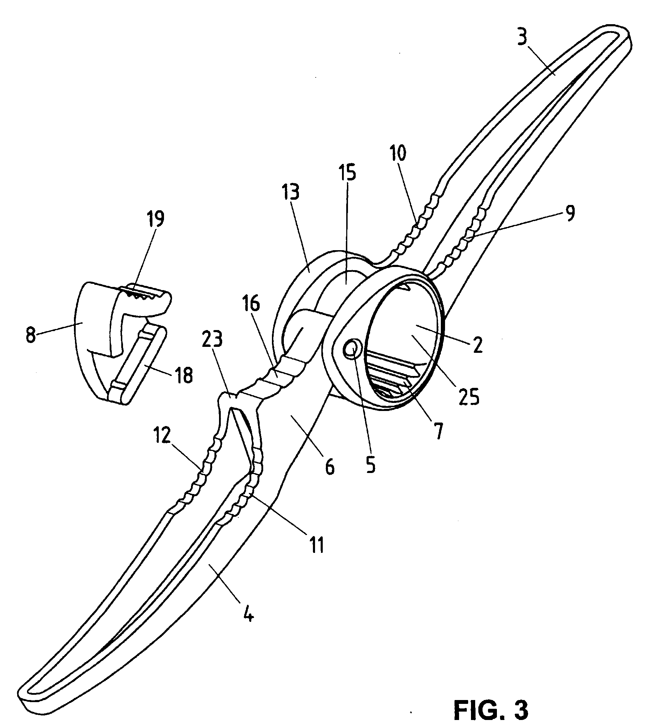

In Fig. 3 ist der Nussknacker in geöffneter Stellung mit dem Korb 2 nach vorne gerichtet dargestellt. Die zu knackende Nuss wird entweder zwischen den Halterippen 7 des Korbes 2 und den Rillen 16 des Drückteils 6 des Drückgriffes 4 oder den Rillen 19 des Einsatzteils 8 gehalten. Es wäre auch möglich, die hintere Korbwand 13 wegzulassen. Allerdings wird bei geschlossener hinterer Korbwand 13 das Herausfallen der Nuss beim Einlegen auf jeden Fall verhindert. Im weiteren ist der Abstand zwischen dem Drückteil 6 des Drückgriffes 4 und der Korbwand 25 so gewählt, dass ein Zermalmen der Nuss nicht möglich ist. Durch den Einsatzteil kann weiter eine optimale Anpassung an die vorliegende Nussgrösse angestrebt werden und weiter kann dadurch der Öffnungswinkel der Griffe 3 und 4 immer in einem optimalen Verhältnis gehalten werden. Der Endbereich 6 oder der Drückteil des Drückgriffes 4 kann direkt in den Korb 2 einlaufen, womit er immer gerade auf die Nuss aufliegt. Dadurch kann ein gutes Quetschergebnis (Öffnen der Nuss) erzielt werden. Die Griffe 3 und 4 sind an ihrer Innenseite zusätzlich mit Rillen 9, 10, 11 und 12 für das Öffnen von übergrossen Nüssen ausgebildet. Mit dem Korb 2 können zusätzlich Flaschen und sonstige Gebinde mit Verschlüssen geöffnet werden. Beim Öffnen von Champagnerflaschen kann durch die hintere Korbwand 13 ein Wegfliegen des Korkens verhindert werden.

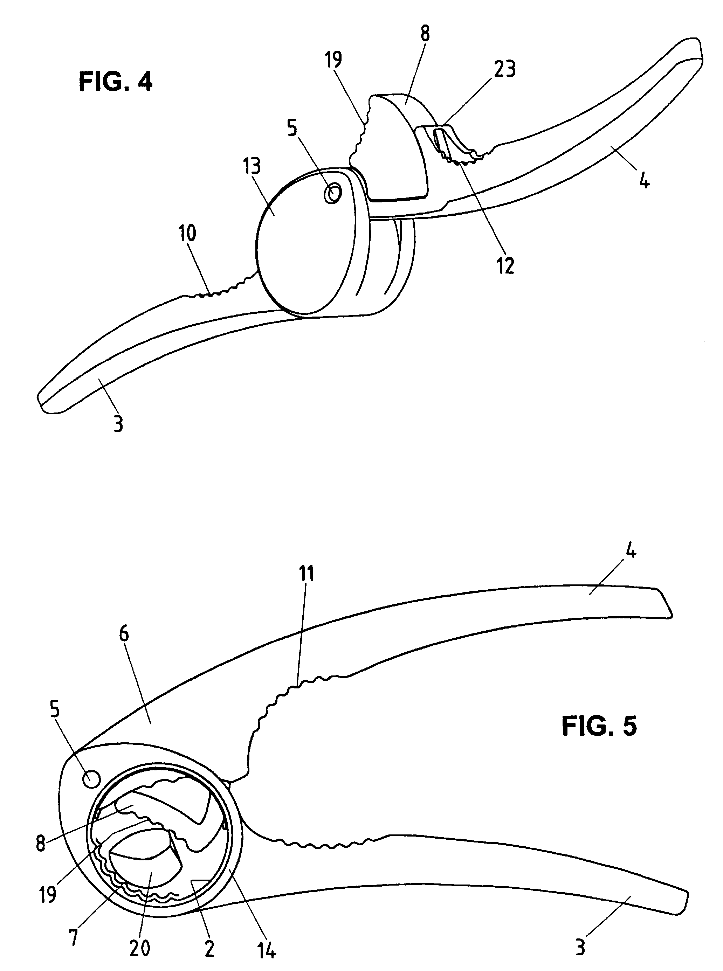

Fig. 4 zeigt den geöffneten Nussknacker mit eingesetztem Einsatzteil 8.

Fig. 5 zeigt den Nussknacker mit eingesetztem Einsatzteil 8 beim Öffnen einer kleinen Nuss 20. Die Nuss wird dabei zwischen den Rillen 19 des Einsatzteiles 8 und den Halterippen 7 des Korbes 2 gehalten.

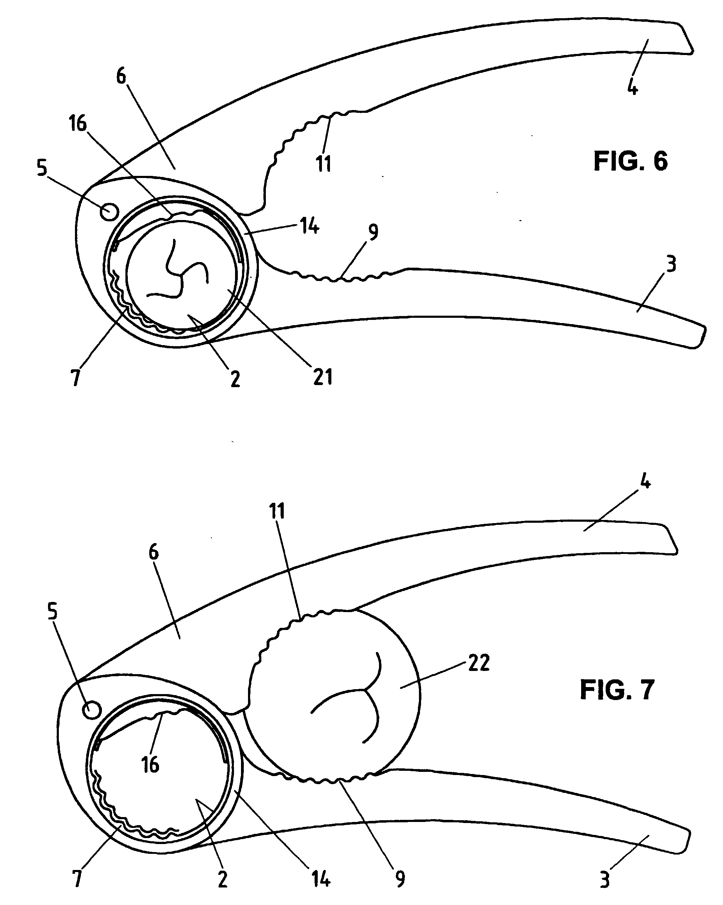

Fig. 6 zeigt den Nussknacker im Einsatz beim Öffnen einer mittleren Nuss 21. Diese wird zwischen den Rillen des Drückteils 6 des Drückgriffes 4 und den Halterippen 7 des Korbes 2 gehalten. Der Einsatzteil 8 ist nicht eingesetzt.

Fig. 7 zeigt den Nussknacker beim Öffnen einer übergrossen Nuss zwischen den Rillen 9, 10, 11 und 12 im inneren Bereich der Griffe 3 und 4.

Bei einer in der Zeichnung nicht dargestellten Ausführungsform wird ein entsprechend ausgebildeter Einsatzteil nicht auf den Endbereich des Drückgriffes aufgesetzt, sondern in das beispielsweise als Korb ausgebildete Aufnahmemittel eingesetzt.

## Patentansprüche

1. Nussknacker mit zwei zueinander verdrehbaren Griffen (3, 4), wobei der eine der Griffe (3) an seinem Ende mit einem Aufnahmemittel (2) zur Aufnahme einer Nuss versehen ist, und das Aufnahmemittel (2) im Endbereich (6) des als Drückgriff wirkenden anderen Griffes (4) mit einer Öffnung (15) versehen ist, durch welche der Drückgriff mit seinem als Drückteil wirkenden Endbereich (6) direkt in das Aufnahmemittel einlaufen kann, dadurch gekennzeichnet, dass das Aufnahmemittel als Korb (2) ausgebildet ist und dass ein auf den Endbereich (6) des Drückgriffes (4) aufsetzbarer Einsatzteil (8) vorgesehen ist, der mit dem Endbereich (6) in die Öffnung (15) des Korbes (2) einlaufen kann.

2. Nussknacker nach Patentanspruch 1, dadurch gekennzeichnet, dass die hintere Korbwand (13) geschlossen ist.

3. Nussknacker nach Patentanspruch 1, dadurch gekennzeichnet, dass der Korb (2) zumindest im Inneren teilweise mit Halterippen (7) versehen ist.

4. Nussknacker nach einem der vorangehenden Patentansprüche, dadurch gekennzeichnet, dass der Einsatzteil (8) mit Halterillen (19) versehen ist.

5. Nussknacker nach einem der vorangehenden Patentansprüche, dadurch gekennzeichnet, dass der Endbereich (6) des Drückgriffes mit einer Nut (17) zum Einführen eines Ansatzes (18) des Einsatzteiles (8) versehen ist.

6. Nussknacker nach einem der vorangehenden Patentansprüche, dadurch gekennzeichnet, dass der eine Griff (3) und der Drückgriff (14) im Endbereich mit Anschlägen (23, 24) versehen sind.

7. Nussknacker nach einem der vorangehenden Patentansprüche, dadurch gekennzeichnet, dass die Griffe (3, 4) an ihrer Innenseite mit gerillten Aussparungen (9, 10, 11, 12) zur Aufnahme von übergrossen Nüssen ausgebildet sind.

## Claims

1. Nutcracker with two handles (3, 4) which can be pivoted toward each other, one of the handles (3) being provided at its end with a receiving means (2) to receive a nut, and the receiving means (2) in the end region (6) of the other handle (4), serving as the pressing handle, being provided with an aperture (15) through which the pressing handle, with its end region (6) acting as the pressing part, can run directly into the receiving means, characterised in that the receiving means is designed as a basket (2) and in that an insert part (8) is provided, placeable on the end region (6) of the pressing handle (4), which insert part can run into the aperture (15) of the basket (2) with the end region (6).

2. Nutcracker according to claim 1, characterised in that the rear wall (13) of the basket is closed off.

3. Nutcracker according to claim 1, characterised in that the basket (2) is provided at least partially on the inside with retaining ribs (7).

4. Nutcracker according to one of the preceding claims, characterised in that the insert part (8) is provided with retaining grooves (19).

5. Nutcracker according to one of the preceding claims, characterised in that the end region (6) of the pressing handle is provided with a slot (17) for introducing a projection (18) of the insert part (8).

6. Nutcracker according to one of the preceding claims, characterised in that the one handle (3) and the pressing handle (14) <*sic. (4)*> are provided with stops (23, 24) in the end region.

7. Nutcracker according to one of the preceding claims, characterised in that the handles (3, 4) are designed with grooved recesses (9, 10, 11, 12) on their interior for receiving oversized nuts.

## Revendications

1. Casse-noix comportant deux branches (3, 4) pouvant tourner l'une par rapport à l'autre, l'une de ces branches (3) étant pourvue à son extrémité d'un réceptacle (2) destiné à recevoir une noix et le réceptacle (2) présentant, dans la partie terminale (6) de l'autre branche (4), qui joue le rôle de branche de pression, une ouverture (15) par laquelle la branche de pression peut pénétrer directement, par sa partie terminale (6) jouant le rôle d'élément de pression, dans le réceptacle, caractérisé en ce que le réceptacle est réalisé sous la forme d'une corbeille (2) et qu'il existe un élément supplémentaire (8) pouvant être mis en place sur la partie terminale (6) de la branche de pression (4), et qui peut pénétrer, avec la partie terminale (6), dans l'ouverture (15) de la corbeille (2).

2. Casse-noix selon la première revendication, caractérisé en ce que la paroi arrière (13) de la corbeille est fermée.

3. Casse-noix selon la première revendication, caractérisé en ce que la corbeille (2) est en partie garnie de nervures de maintien (7), au moins à l'intérieur.

4. Casse-noix selon l'une des revendications précédentes, caractérisé en ce que l'élément supplémentaire (8) est pourvu de rainures de maintien (19).

5. Casse-noix selon l'une des revendications précédentes, caractérisé en ce que la partie terminale (6) de la branche de pression présente une rainure (17) servant à introduire une saillie (18) de l'élément supplémentaire (8).

6. Casse-noix selon l'une des revendications précédentes, caractérisé en ce que l'une des branches (3) et la branche de pression (14) sont pourvues de butées (23, 24) dans leur partie terminale.

7. Casse-noix selon l'une des revendications précédentes, caractérisé en ce que les branches (3, 4) présentent du côté intérieur des renfoncements cannelés (9, 10, 11, 12) destinées à recevoir les très grosses noix.
